# EUROPÄISCHE PATENTANMELDUNG

(11) **EP 1 871 066 A1**
(43) Veröffentlichungstag der Anmeldung: **26.12.2007**
(21) Anmeldenummer: 06090112.1
(22) Anmeldetag: 21.06.2006
(51) Int. Cl.: H04L 29/06, H04M 15/08

(54) **Verfahren zum Herstellen einer paketorientierten Kommunikationsverbindung, Mobilfunkendgerät und Kommunikationssystem**

(71) Anmelder: Siemens AG, 80333 München (DE)
(72) Erfinder: Andersen, Frank-Uwe, 10625 Berlin (DE); Köpsel, Andreas, 14199 Berlin (DE)

(57) **Zusammenfassung**

Die Erfindung bezieht sich auf ein Verfahren zum Herstellen einer paketorientierten Kommunikationsverbindung zwischen einem ersten und einem zweiten Kommunikationsteilnehmer (10, 40).

Erfindungsgemäß ist vorgesehen, dass der erste Kommunikationsteilnehmer (10) bei einem Netzzugangspunkt (PEP) eines Kommunikationssystems (30) angemeldet und unter Zuweisung eines vorgegebenen ersten Anmeldestatus (A1) authentifiziert wird und die Kommunikationsverbindung auf eine Verbindungsanfrage (VA) des ersten Kommunikationsteilnehmers (10) hin hergestellt wird, sofern der zweite Kommunikationsteilnehmer (40) zuvor ein die Übernahme der Verbindungskosten signalisierendes Steuersignal (CT) an das Kommunikationssystem (30) übersendet hat.

## Beschreibung

Verfahren zum Herstellen einer paketorientierten Kommunikationsverbindung, Mobilfunkendgerät und Kommunikationssystem

Die Erfindung bezieht sich auf ein Verfahren zum Herstellen einer paketorientierten Kommunikationsverbindung zwischen einem ersten und einem zweiten Kommunikationsteilnehmer.

Bei vorbekannten Kommunikationssystemen ist die Kopplung der Vergebührung an den Netzwerkzugang in der Zugangsstruktur des Kommunikationssystems implementiert. Als so genannte Policy Enforcement Points (PEPs) arbeitende Netzzugangspunkte kontrollieren den Zugang der Kommunikationsteilnehmer basierend auf deren Authentifizierungszustand. Die Authentifizierungsdaten liegen hierbei zumeist auf zentralisierten Datenbanksystemen - meist Policy Decision Points (PDPs) genannt-, um Management, Konfiguration und Wartbarkeit zu vereinfachen. Diesen Ansatz verfolgen beispielsweise auch Terminal-Server für Modem- oder ISDN-Zugänge mittels Point-to-Point Protokollen, aber auch Wireless-LAN-fähige Basisstationen nach dem Standard IEEE 802.11i oder Digital Subscriber Line (DSL) basierte Zugänge.

In der Druckschrift "Toll-FREE IP (TIP): Architecture and Implementation" (Tao-Zhang, Sunil Madhani und Miriam Tauil, 0-7803-8966-2/05, IEEE 2005) orientieren sich die Autoren an diesem Grundprinzip und erweitern die bekannten Policy Enforcement Points um Funktionalität, um Netzwerkwerkzugang nicht anhand einer Nutzerauthentifizierung, sondern basierend auf dem gewünschten Ziel der Kommunikation, beispielsweise einer IP-Adresse oder eines Fully Qualified Domain Namens (FQDN) zu gewähren. Hierbei werden zusätzliche AAA-Attribute für die Authentisierung, die Autorisierung und die Abrechnung in dem Radius- bzw. Diameterprotokoll definiert, die eine Kommunikation zwischen den Policy Enforcement Points und einem so genannten TIP-Server ermöglichen. Die Policy Enforcement Points übermitteln hierbei die Zieladresse an den TIP-Server. Der TIP-Server verwaltet eine Datenbank, in der vergebührungsfreie Zieladressen gespeichert sind, und der Netzwerkzugang zu einer Zieladresse wird erlaubt, wenn diese lokal als vergebührungsfrei eingetragen ist.

Das vorgestellte Kommunikationssystem ist zwar einfach in bestehende Authentifizierungsstrukturen zu integrieren, indem die benötigten AAA-Attribute definiert werden, jedoch weist es einige kritische Sicherheitsprobleme auf: Der TIP-Ansatz erlaubt nämlich zum Beispiel die Nutzung von FQDNs (FQDN: Fully Qualified Domain Name) zur Zielangabe, die anschließend durch Domain-Name-System(DNS)-Anfragen jeweils von einem "Fully Qualified Domain Namen" in eine IP-Adresse umgesetzt werden; da somit eine freie Benutzung des Domain-Name-Systems über die Policy Enforcement Points möglich ist und der Datenverkehr unabhängig vom Authentifizierungszustand des Kommunikationsteilnehmers durch den zugeordneten Policy Enforcement Point zugelassen wird, kann ein so genanntes "DNS-Tunneling" missbraucht werden, um sich widerrechtlich einen Netzzugang zu erschleichen.

Der Erfindung liegt demgemäß die Aufgabe zugrunde, ein Verfahren zum Herstellen einer paketorientierten Kommunikationsverbindung anzugeben, das zusätzliche Dienstleistungen für die Kommunikationsteilnehmer ermöglicht und dennoch ein hohes Maß an Betrugssicherheit gewährleistet.

Diese Aufgabe wird erfindungsgemäß durch ein Verfahren mit den Merkmalen des Patentanspruchs 1 gelöst. Vorteilhafte Ausgestaltungen des erfindungsgemäßen Verfahrens sind in Unteransprüchen angegeben.

Danach ist erfindungsgemäß vorgesehen, dass ein erster Kommunikationsteilnehmer zum Herstellen einer paketorientierten Kommunikationsverbindung bei seinem Netzzugangspunkt angemeldet und unter Zuweisung eines vorgegebenen ersten Anmeldestatus authentifiziert wird. Nach der Authentifizierung wird eine Kommunikationsverbindung auf eine Verbindungsanfrage des ersten Kommunikationsteilnehmers hin hergestellt, sofern der zweite Kommunikationsteilnehmer zuvor ein eine Übernahme der Verbindungskosten signalisierendes Steuersignal an das Kommunikationssystem übersendet hat.

Ein wesentlicher Vorteil des erfindungsgemäßen Verfahrens ist darin zu sehen, dass dieses gegenüber einem Betrugsversuch deutlich abgesicherter ist als das vorbekannte Verfahren; denn bei dem erfindungsgemäßen Verfahren werden im Unterschied zu dem vorbekannten Verfahren Kommunikationsverbindungen nur dann hergestellt, wenn ein Kostenträger eindeutig zugeordnet ist. Um dies zu erreichen, wird bei dem erfindungsgemäßen Verfahren zunächst eine vollständige Authentifizierung des die Verbindung wünschenden ersten Kommunikationsteilnehmers durchgeführt; dies ermöglicht es nämlich, dem ersten Kommunikationsteilnehmer die Verbindungskosten aufzuerlegen, wenn der angesprochene zweite Kommunikationsteilnehmer - aus welchen Gründen auch immer - die Übernahme der Kosten ablehnt. Eine solche Kostenzuweisung an den ersten Kommunikationsteilnehmer ist bei dem eingangs erwähnten vorbekannten "TIP-Verfahren" nicht möglich, da eine Authentifizierung des den Verbindungsaufbau wünschenden ersten Kommunikationsteilnehmers nicht durchgeführt wird.

Als vorteilhaft wird es angesehen, wenn der Anmeldestatus des ersten Kommunikationsteilnehmers zumindest bezüglich der angefragten Kommunikationsverbindung zum zweiten Kommunikationsteilnehmer in einen vorgegebenen zweiten Anmeldestatus überführt wird, sobald das Steuersignal des zweiten Kommunikationsteilnehmers beim Kommunikationssystem vorliegt. Durch einen solchen zweiten Anmeldestatus, der sich von dem ersten Anmeldestatus unterscheidet, kann in besonders einfacher und damit vorteilhafter Weise sichergestellt werden, dass eine Doppelvergebührung vermieden wird, beispielsweise indem der zweite Anmeldestatus grundsätzlich als kostenfrei für den von diesem Status betroffenen Kommunikationsteilnehmer definiert wird.

Das beschriebene Verfahren kann beispielsweise bei internetkompatiblen Kommunikationsverbindungen eingesetzt werden.

Gemäß einer besonders bevorzugten Variante ist vorgesehen, dass die Verbindungsanfrage des ersten Kommunikationsteilnehmers ein Aufforderungssignal enthält, mit dem der zweite Kommunikationsteilnehmer zur Abgabe des Steuersignals aufgefordert wird, und die Kommunikationsverbindung hergestellt wird, sofern der zweite Kommunikationsteilnehmer das Steuersignal an das Kommunikationssystem übersendet, und andernfalls die weitere Kommunikation zwischen den beiden Kommunikationsteilnehmern kommunikationssystemseitig unterbunden oder nur auf Kosten des ersten Kommunikationsteilnehmers aufrechterhalten oder freigegeben wird.

Als internetkompatible Kommunikationsverbindung kann beispielsweise eine Telefonverbindung nach dem Internet-Protokoll (IP) hergestellt werden; sobald der "angerufene" zweite Kommunikationsteilnehmer die Verbindungskosten übernimmt, handelt es sich sozusagen um ein R-Gespräch im IP-Format.

Alternativ oder zusätzlich kann im Rahmen der internetkompatiblen Kommunikationsverbindung auch eine WEB-Seiten-Übertragung erfolgen.

Als besonders vorteilhaft wird es angesehen, wenn mit der Verbindungsanfrage eine zumindest die Dateigröße einer zu übersendenden Datei angebende Dateiinformation an den zweiten Kommunikationsteilnehmer übersandt wird. Die Übermittlung der Datei an den zweiten Kommunikationsteilnehmer erfolgt vorzugsweise erst anschließend, nachdem dieser das Steuersignal zur Kostenübernahme an das Kommunikationssystem übersendet hat. Zusätzlich zu der Dateigröße kann auch die Identität des sendenden ersten Kommunikationsteilnehmers übermittelt werden, damit der Empfänger besser einschätzen kann, ob die Datei für ihn von Interesse ist.

Als Datei kann beispielsweise eine Email, eine SMS, eine MMS oder eine Datendatei übersendet werden.

Im Hinblick darauf, dass insbesondere im Mobilfunkbereich relativ hohe Gebühren anfallen, wird es als vorteilhaft angesehen, wenn das beschriebene Verfahren bei Mobilfunksystemen eingesetzt wird, bei denen der erste und/oder der zweite Kommunikationsteilnehmer mit dem Kommunikationssystem über eine Mobilfunkverbindung in Verbindung stehen.

Falls der zweite Kommunikationsteilnehmer nicht "online" geschaltet bzw. nicht korrekt angemeldet und authentifiziert ist, beispielsweise aus Kostengründen, so wird es als vorteilhaft angesehen, wenn der zweite Kommunikationsteilnehmer vom Kommunikationssystem von seinem zugehörigen Netzzugangspunkt selbsttätig angemeldet und authentifiziert wird, sobald eine Verbindungsanfrage für ihn beim Kommunikationssystem vorliegt. Eine solche Betriebsart ermöglicht ein hohes Maß an Erreichbarkeit bei gleichzeitig geringen Verbindungskosten, weil ein "Online-Betrieb" nur dann initiiert wird, wenn tatsächlich zu übertragende Daten vorliegen.

Die Erfindung bezieht sich außerdem auf ein Mobilfunkendgerät zur Durchführung des beschriebenen Verfahrens. Erfindungsgemäß ist diesbezüglich vorgesehen, dass das Mobilfunkendgerät eine Steuereinrichtung aufweist, die zum Erzeugen einer ein Aufforderungssignal enthaltenden Verbindungsanfrage geeignet ist und/oder zum Verarbeiten einer solchen Verbindungsanfrage sowie zum Erzeugen eines Steuersignals zur Kostenübernahme geeignet ist.

Die Erfindung bezieht sich darüber hinaus auf ein Kommunikationssystem zur Durchführung des beschriebenen Verfahrens.

Erfindungsgemäß ist diesbezüglich vorgesehen, dass der Netzzugangspunkt derart ausgestaltet ist, dass er nach Anmelden und Authentifizieren des ersten Kommunikationsteilnehmers auf eine ein Aufforderungssignal enthaltende Verbindungsanfrage des ersten Kommunikationsteilnehmers hin eine Kommunikationsverbindung zu einem zweiten Kommunikationsteilnehmer ermöglicht, sofern der zweite Kommunikationsteilnehmer ein die Übernahme der Verbindungskosten signalisierendes Steuersignal an das Kommunikationssystem übersendet oder bereits zuvor übersendet hat.

Vorzugsweise ist ein solches Kommunikationssystem derart ausgestaltet, dass die Netzzugangspunkte, zumindest einige davon, geeignet sind, für jeden Kommunikationsteilnehmer zumindest zwei unterschiedliche Anmeldestatus zu verwalten. Einer der zwei Anmeldestatus bezeichnet vorzugsweise einen angemeldeten und authentifizierten Teilnehmer mit Vergebührung und der zweite Anmeldestatus einen angemeldeten und authentifizierten Teilnehmer ohne Vergebührung.

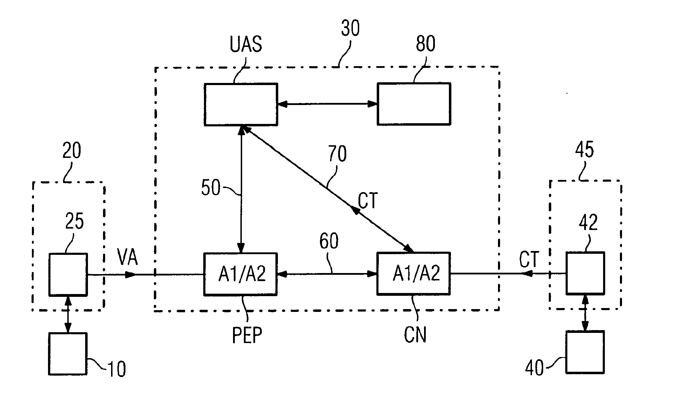

Die Erfindung wird nachfolgend anhand von Ausführungsbeispielen näher erläutert. Dabei zeigt Figur 1 ein Ausführungsbeispiel für ein erfindungsgemäßes Kommunikationssystem, anhand dessen das erfindungsgemäße Verfahren beispielhaft erläutert wird.

In der Figur 1 sieht man einen ersten Kommunikationsteilnehmer 10, der mit einem eine Steuereinrichtung 25 enthaltenden Mobilfunkendgerät 20 an ein Kommunikationssystem 30 angeschlossen ist und eine paketorientierte Kommunikationsverbindung mit einem zweiten Kommunikationsteilnehmer 40 mit einem eine Steuereinrichtung 42 enthaltenden Mobilfunkendgerät 45 herstellen will.

Man erkennt in der Figur 1 außerdem, dass das Kommunikationssystem 30 einen Netzzugangspunkt in Form eines "Policy Enforcement Points" PEP aufweist, der mit einer Zugangssteuereinheit UAS sowie einem korrespondierenden Netzzugangspunkt CN über Datenleitungen 50 und 60 in Verbindung steht. Die Zugangssteuereinheit UAS sowie der Netzzugangspunkt CN sind untereinander ebenfalls verbunden, und zwar über eine Datenleitung 70. Darüber hinaus ist das Kommunikationssystem 30 mit einer Datenbank 80 ausgestaltet, die mit der Zugangssteuereinheit UAS in Verbindung steht.

Für den Aufbau einer Kommunikationsverbindung zwischen dem ersten Kommunikationsteilnehmer 10 und dem zweiten Kommunikationsteilnehmer 40 wird das Mobilfunkendgerät 20 zunächst eine Mobilfunkverbindung zu dem zugeordneten Netzzugangspunkt PEP aufbauen. Im Rahmen dieser Mobilfunkverbindung wird das Mobilfunkendgerät 20 beim Netzzugangspunkt PEP angemeldet und authentifiziert und gelangt somit in einen ersten Anmeldestatus, in dem es zur Gebührenübernahme verpflichtet ist.

Im Rahmen des Verbindungsaufbaus oder danach übersendet das Mobilfunkendgerät 20 zu seinem Netzzugangspunkt PEP anstelle einer "normalen" Verbindungsanfrage, bei der es die nachfolgenden Verbindungskosten selbst tragen würde, beispielsweise eine entsprechend abgeänderte Verbindungsanfrage, mit der der Wunsch nach einer kostenfreien Verbindung und einer Kostenübernahme durch den zweiten Kommunikationsteilnehmer 40 geäußert wird.

In einem solchen Falle wird der Netzzugangspunkt PEP die gewünschte Kommunikationsverbindung nur dann vollständig aufbauen bzw. fortsetzen, wenn der zweite Kommunikationsteilnehmer 40 die Kostenübernahme signalisiert und ein entsprechendes Steuersignal CT erzeugt und an das Kommunikationssystem 30 übersendet oder ein solches Steuersignal CT bereits vorliegt.

Sobald eine Übernahme der weiteren Kosten durch den zweiten Kommunikationsteilnehmer 40 feststeht, kann der erste Kommunikationsteilnehmer 10 in einen zweiten Anmeldestatus gesetzt werden, in dem er zwar angemeldet und authentifiziert ist, er jedoch keine Gebühren mehr zahlen muss.

Nachfolgend sollen nun verschiedene Betriebsarten beispielhaft erläutert werden, die mit dem Kommunikationssystem 30 gemäß Figur 1 durchführbar sind.

### Beispiel I:

Bei diesem Beispiel wird davon ausgegangen, dass der erste Kommunikationsteilnehmer 10 einen gebührenfreien Zugang zu einem Web-Server des zweiten Kommunikationsteilnehmers 40 anstrebt. Um dies zu ermöglichen, registriert der zweite Kommunikationsteilnehmer 40 die IP-Adresse seines Web-Servers bei der Zugangssteuereinheit UAS des Kommunikationssystems 30 und registriert damit seine Bereitschaft, anfallende Gebühren zu übernehmen. Die entsprechende Registrierung der Gebührenübernahme erfolgt durch das Übersenden eines entsprechenden Steuersignals bzw. "Charging Tickts" CT an die Zugangssteuereinheit UAS des Kommunikationssystems 30.

Zusammen mit oder im Rahmen des Steuersignals CT können darüber hinaus weitere Parameter, beispielsweise eine Zeitdauer für den gebührenfreien Zugriff oder eine Menge bestimmter Nutzeridentitäten mitgesendet werden, die einen Netzzugang auf Kosten des zweiten Kommunikationsteilnehmers 40 erhalten sollen. Vorzugsweise wird das Steuersignal CT verschlüsselt und kryptographisch durch den Kommunikationsteilnehmer 40 signiert.

Versucht nun der erste Kommunikationsteilnehmer 10 mit der entsprechenden Webseite Kontakt aufzunehmen, so kontaktiert er seinen zugehörigen Netzzugangspunkt PEP des Kommunikationssystems 30, der daraufhin die Zugangssteuereinheit UAS kontaktiert und die Kennung des ersten Kommunikationsteilnehmers 10 sowie die gewünschte Webseitenadresse übermittelt. Die Zugangssteuereinheit UAS fragt daraufhin die zugeordnete Datenbank 80 ab, um festzustellen, ob für die gewünschte Webseite ein entsprechendes Steuersignal CT vorliegt. Nach erfolgter Datenbankabfrage sendet die Zugangssteuereinheit UAS eine entsprechende Antwort gemäß dem lokalen Datenbankbestand in der Datenbank 80 an den Netzzugangspunkt PEP, der demgemäß den Zugang des ersten Kommunikationsteilnehmers 10 zum Kommunikationssystem 30 gewährt oder verweigert.

Kommt es zu einer Verweigerung des Verbindungsaufbaus, so ist das Kommunikationssystem 30 in der Lage, die Kosten für den fehlgeschlagenen Verbindungsaufbauversuch dem ersten Kommunikationsteilnehmer 10 in Rechnung zu stellen, da nämlich - im Unterschied zu dem eingangs beschriebenen vorbekannten Verfahren - vor der Abfrage der Zugangssteuereinheit UAS und der Datenbank 80 bereits eine Anmeldung und Authentifizierung des ersten Kommunikationsteilnehmers 10 beim Netzzugangspunkt PEP erfolgt ist, so dass die Identität des ersten Kommunikationsteilnehmers feststeht und dieser für die Kosten verantwortlich gemacht werden kann.

### Beispiel II:

Bei diesem Beispiel wird davon ausgegangen, dass eine Voice over IP (VoIP) basierte Telefonverbindung zwischen dem ersten Kommunikationsteilnehmer 10 und dem zweiten Kommunikationsteilnehmer 40 aufgebaut werden soll. Dabei wird beispielhaft davon ausgegangen, dass sich der zweite Kommunikationsteilnehmer in dem bereits erwähnten zweiten Anmeldestatus befinden, in dem er zwar angemeldet und authentifiziert ist, er jedoch keinen Datenverkehr empfangen kann, weil der zweite Anmeldestatus gebührenfrei ist. Ein unmittelbarer Verbindungsaufbau zwischen den beiden Kommunikationsteilnehmern 10 und 40 ist somit nicht möglich.

Um dennoch eine Verbindung aufzubauen, übermittelt der erste Kommunikationsteilnehmer 10 über seinen zugeordneten Netzzugangspunkt PEP an die Zugangssteuereinheit UAS seinen entsprechenden Verbindungsaufbauwunsch. Eine entsprechende Verbindungsanfrage VA enthält neben der beglaubigten Identität des ersten Kommunikationsteilnehmers 10 auch die Identität des zweiten Kommunikationsteilnehmers 40. Die Zugangssteuereinheit UAS löst daraufhin im Weiteren die Lokalisation des zweiten Kommunikationsteilnehmers 40 aus, indem sie dessen IP-Adresse ermittelt und den zugehörigen Netzzugangspunkt CN über die zukünftige VoIP-Kommunikation zwischen den beiden IP-Adressen des ersten und zweiten Kommunikationsteilnehmers 10 und 40 informiert. Die entsprechende Meldung kann mittels des verwendeten AAA-Frame Work übermittelt werden. Serverseitig initiierte Verbindungen in AAA-Architekturen sind für Radius-Protokolle optional und in der Norm RFC3576 spezifiziert, während diese für Diameter-Protokolle bereits in der Basisspezifikation gemäß RFC3588 definiert sind.

Die Zugangssteuereinheit UAS bestätigt die Freischaltung der Verbindung gegenüber dem Netzzugangspunkt PEP, so dass der Netzzugangspunkt CN einen IP-Kanal zwischen der IP-Adresse des ersten Kommunikationsteilnehmers 10 und der des zweiten Kommunikationsteilnehmers 40 öffnet. Andere Verbindungen bleiben dabei zunächst gesperrt, da sich der zweite Kommunikationsteilnehmer 40 in dem nur beschränkten Verkehr ermöglichenden zweiten Anmeldestatus (Authentifizierungszustand) befindet.

Nachdem in dieser Weise die IP-Verbindung hergestellt worden ist, muss von den beiden Kommunikationsteilnehmern 10 und 40 entschieden werden, wer die Verbindungskosten trägt. Sollen die Verbindungskosten durch den zweiten Kommunikationsteilnehmer 40 übernommen werden, so muss dieser ein entsprechendes Steuersignal CT an die Zugangssteuereinheit UAS übersenden. Geschieht dies nicht und ist der erste Kommunikationsteilnehmer 10 ebenfalls nicht zur Kostenübernahme bereit, so wird der Verbindungsaufbau abgebrochen, wobei die Kosten für den fehlgeschlagenen Verbindungsaufbauversuch vom Kommunikationssystem 30 dem ersten Kommunikationsteilnehmer 10 in Rechnung gestellt werden oder zumindest gestellt werden können, da dieser bereits bei der Abgabe der Verbindungsanfrage angemeldet und authentifiziert war, so dass eine eindeutige Kostenzuordnung möglich ist.

### Beispiel III:

Bei diesem Ausführungsbeispiel wird davon ausgegangen, dass eine Voice over IP (VoIP)-Telefonverbindung zwischen dem ersten Kommunikationsteilnehmer 10 und dem zweiten Kommunikationsteilnehmer 20 aufgebaut werden soll, wobei jedoch schon von vornherein feststeht dass der zweite Kommunikationsteilnehmer 40 die Kosten der Verbindung tragen soll.

Zunächst befindet sich der erste Kommunikationsteilnehmer 10 beispielsweise in seinem zweiten Anmeldestatus bzw. Authentifizierungszustand, in dem er zwar angemeldet und authentifiziert ist, jedoch eine Vergebührung nicht stattfinden soll. Sendet er nun eine entsprechende Verbindungsanfrage an seinen zugehörigen Netzzugangspunkt PEP bzw. an die Zugangssteuereinheit UAS, so wird er automatisch in den ersten Anmeldestatus geschaltet, in dem er angemeldet und authentifiziert ist sowie zusätzlich auch mit den etwaig entstehenden Verbindungskosten beaufschlagt wird, sofern diese nicht vom zweiten Kommunikationsteilnehmer 40 übernommen werden.

Durch das Feststellen der Identität des ersten Kommunikationsteilnehmers 10 sowohl im ersten Anmeldestatus als auch im zweiten Anmeldestatus ist stets sichergestellt, dass einem Kommunikationsteilnehmer, der eine Verbindungsanfrage startet, stets die entsprechenden Verbindungskosten zugewiesen werden können, sofern sich kein anderer "neuer" Kostenträger findet. Eine solche eindeutige Kostenzuordnung verhindert, dass womöglich kein Kostenverantwortlicher zur Rechenschaft gezogen werden kann und der Betreiber des Kommunikationssystems 30 selbst mit den Kosten belastet wird, wie dies beispielsweise bei dem eingangs beschriebenen TIP-Verfahren geschieht, wenn nicht kostenfreie WEB-Seiten aufgerufen werden und ein Verbindungsaufbau demgemäß scheitert. Außerdem wird durch die Identitätsfeststellung des "anrufenden" bzw. die Verbindung wünschenden Kommunikationsteilnehmers 10 sichergestellt, dass Betrugsversuche bei der Benutzung des Kommunikationssystems 30 verhindert bzw. nachträglich aufgedeckt werden können.

Sofern sich der zweite Kommunikationsteilnehmer 40 auf eine Kostenübernahme einlässt, so sendet er ein entsprechendes Steuersignal CT (Charging Ticket) an die Zugangssteuerung UAS mit den entsprechenden Parametern, bei denen es sich beispielsweise um die Nutzeridentität des ersten und des zweiten Kommunikationsteilnehmers 10 und 40 sowie um sonstige Parameter wie Signierungen und dergleichen handeln kann.

Die Zugangssteuereinheit UAS kann dann nachfolgend mit dem zweiten Kommunikationsteilnehmer 40 aushandeln, ob dieser auch bereit ist, die Verbindungskosten zu tragen, die im Vorfeld im Rahmen der Verbindungsanfrage durch den ersten Kommunikationsteilnehmer 10 bereits entstanden sind. Ist dies der Fall, so wird der erste Kostenverantwortliche, nämlich im vorliegenden beispielhaften Fall der erste Kommunikationsteilnehmer 10, durch einen zweiten Kostenverantwortlichen, nämlich den zweiten Kommunikationsteilnehmer 40, ersetzt, so dass dieser "nachträglich" für die vom ersten Kommunikationsteilnehmer 10 verursachten Verbindungskosten zur Verantwortung gezogen wird. Ein wesentlicher Aspekt dieses Ausführungsbeispiels ist also darin zu sehen, dass eine nachträgliche Kostenübernahme durch den zweiten Kommunikationsteilnehmer 40 auch für solche Verbindungen möglich ist, die bereits zeitlich zurückliegen.

Falls der zweite Kommunikationsteilnehmer 40 nicht "online" geschaltet bzw. nicht korrekt angemeldet und authentifiziert ist, beispielsweise aus Kostengründen, so wird es als vorteilhaft angesehen, wenn der zweite Kommunikationsteilnehmer 40 vom Kommunikationssystem 30, konkret von seinem zugehörigen Netzzugangspunkt CN, selbsttätig angemeldet und authentifiziert wird, sobald eine Verbindungsanfrage VA für ihn beim Kommunikationssystem 30 vorliegt. Eine solche Betriebsart ermöglicht ein hohes Maß an Erreichbarkeit bei gleichzeitig geringen Verbindungskosten, weil ein "Online-Betrieb" nur dann initiiert wird, wenn tatsächlich zu übertragende Daten vorliegen. Ein solches automatisches Anmelden wird beispielsweise im Rahmen des 3GPP-Standards mit der Funktionalität "network initiated PDP context activation" bzw. "network requested context activation NRCA" (3GPP TS 27.060 V5.6.0 (2003-12) Technical Specification "Mobile Station (MS) supporting Packet Switched Services") ermöglicht; bei diesem Betriebsmodus kann das Kommunikationssystem 30 eine Paketverbindung zu dem zweiten Kommunikationsteilnehmer 40 herstellen, auch wenn dieser keinen IP-fähigen PDP Kontext aktiv oder zugeordnet hat. Wird nach einem solchen Verbindungsaufbau durch das Kommunikationssystem 30 die Kostenübernahme vom zweiten Kommunikationsteilnehmer 40 abgelehnt, weil dieser nicht kommunizieren will, so können die Kosten für die vergebliche Verbindungsaufnahme dem ersten Kommunikationsteilnehmer 10 in Rechnung gestellt werden, da sich dieser im ersten Anmeldestatus befindet und somit "identifiziert" ist er und die Verbindungskosten ursächlich ausgelöst hat.

### Beispiel IV:

Bei diesem vierten Ausführungsbeispiel soll eine Datei, beispielsweise eine Datendatei (Textdatei, Bilddatei, Video-Datei) oder Email, von dem ersten Kommunikationsteilnehmer 10 zu dem zweiten Kommunikationsteilnehmer 40 übersandt werden. Dabei soll jedoch beispielhaft davon ausgegangen werden, dass der erste Kommunikationsteilnehmer 10 nicht bereit ist, die bei einer Übertragung der Datei entstehenden Verbindungskosten zu übernehmen; stattdessen sollen die Kosten von dem zweiten Kommunikationsteilnehmer 40 übernommen werden.

Zur Dateiübertragung wird der erste Kommunikationsteilnehmer 10 mit seinem Mobilfunkendgerät 20 zunächst eine Verbindungsanfrage VA an den zugehörigen Netzzugangspunkt PEP senden. Die Verbindungsanfrage VA enthält dabei eine Dateiinformation, die zumindest die Dateigröße der zu übersendenden Datei und vorzugsweise auch die Identität des sendenden Kommunikationsteilnehmers 10 angibt.

Aus der Dateigröße lässt sich, zumindest näherungsweise, ermitteln, welche Verbindungskosten für die Übermittlung der Datei voraussichtlich entstehen werden. Das Kommunikationssystem 30 überträgt die entsprechende Verbindungsanfrage VA an den zweiten Kommunikationsteilnehmer 40 mit der Anfrage, ob dieser die entsprechende Datei erhalten und die für die Dateiübertragung entstehenden Verbindungskosten übernehmen will. Damit der zweite Kommunikationsteilnehmer 40 die auf ihn zukommenden Verbindungskosten zumindest abschätzen kann, wird das Kommunikationssystem 30 bei dieser Anfrage entweder die Größe der zu übermittelnden Datei oder statt dessen eine anhand dieser Information kommunikationssystemseitig bereits ermittelte Kostenangabe zu dem zweiten Kommunikationsteilnehmer 40 übertragen.

Ist der zweite Kommunikationsteilnehmer 40 nun bereit, die Datei zu empfangen sowie die Verbindungskosten zu übernehmen, so übersendet er ein entsprechendes Steuersignal CT an das Kommunikationssystem 30, so dass es zu einer Übermittlung der Datei kommt .

Lehnt der zweite Kommunikationsteilnehmer 40 hingegen die Dateiübertragung ab, beispielsweise weil die Datei zu groß ist oder weil er von dem ersten Kommunikationsteilnehmer 10 grundsätzlich keine Dateien erhalten möchte, so wird die Datei zu dem Kommunikationssystem 30 überhaupt nicht erst übertragen, weil nämlich der erste Kommunikationsteilnehmer 10 bzw. sein Mobilfunkendgerät 20 mit der Dateiübertragung erst gar nicht beginnen wird; statt dessen wird die Verbindung vorzugsweise bereits nach der Ablehnung durch den zweiten Kommunikationsteilnehmer 40 abgebrochen. Der erste Kommunikationsteilnehmer 10 wird somit ggf. nur mit den Kosten belastet, die für die Verbindungsanfrage entstanden sind; diese werden jedoch im Allgemeinen relativ gering sein, weil lediglich die Dateigröße der zu übermittelnden Datei und ggf. die Identität des Senders, nicht jedoch die Datei selbst an das Kommunikationssystem 30 übermittelt worden sind.

Zusammengefasst ist festzustellen, dass das beschriebene Verfahren und das beschriebene Kommunikationssystem eine effektive Entkopplung von erbrachten Diensten und verantwortlichen Gebührenzahlungen erlaubt.

Zudem können Kommunikationsteilnehmer, die derzeit wegen zeitbasierter Vergütung des Netzwerkzugangs zumeist die Verbindung zum Netzwerk trennen, wenn diese nicht mehr aktuell benötigt wird, dennoch tatsächlich dauerhaft mit dem Netzwerk verbunden bleiben, ohne hierfür separat zahlen zu müssen.

Im Ergebnis ist festzustellen, dass das Kommunikationssystem 30 gemäß Figur 1 vorzugsweise folgende Eigenschaften aufweist bzw. aufweisen kann:
- Jeder Kommunikationsteilnehmer 10 bzw. 40 kann sich bei seinem zugehörigen Netzzugangspunkt PEP bzw. CEN in einem von drei Zuständen befinden, nämlich einem nicht authentifizierten Zustand NA, einem authentifizierten Zustand A1 mit Vergebührung (erster Anmeldestatus) und einem authentifizierten Zustand A2 ohne Vergebührung A2 (zweiter Anmeldestatus).
- Die Netzzugangspunkte PEP und CN, die jeweils den Netzwerkzugang überwachen, sind jeweils mit der Zugangssteuereinheit UAS verbunden. Diese kann als Teilfunktion in bestehende AAA-Strukturen integriert werden. Als Signalisierungsprotokoll kann hierbei beispielsweise das Radius-Protokoll oder das Diameter-Protokoll zum Einsatz kommen.
- Im Rahmen der Kommunikation zwischen dem Netzzugangspunkt und den zugeordneten Endgeräten wird eine zusätzliche Signalisierung verwendet, die den jeweiligen Authentifizierungszustand A1 oder A2 des jeweiligen Kommunikationsteilnehmers übermittelt. Dies kann beispielsweise "inband" innerhalb bestehender Authentifizierungslösungen geschehen, z. B. im Rahmen von IEEE 802.11i, oder "outband" mittels eines dezidierten Protokolls (z. B. eines Webservice). Die Netzzugangspunkte PEP bzw. CN registrieren ihre jeweiligen Kommunikationsteilnehmer dann mit dem jeweiligen Anmeldestatus A1 bzw. A2 beim Kommunikationssystem 30.
- Sofern einer der Kommunikationsteilnehmer bereits angefallene oder zukünftig noch anfallende Kommunikationsgebühren übernehmen möchte, kann er hierfür entsprechende Steuersignale CT bei der Zugangssteuereinheit UAS registrieren. Diese datenbankspezifische Funktionalität kann innerhalb der Zugangssteuereinheit UAS oder separat in weiteren funktionalen Einheiten mit eigenständigen Interfaces implementiert sein.

Bei den Ausführungsbeispielen gemäß der Figur 1 wurde davon ausgegangen, dass die Kommunikationsteilnehmer 10 und 40 mittels der Mobilfunkendgeräte 20 und 45 an das Kommunikationssystem 30 angeschlossen sind; selbstverständlich ist auch ein drahtgebundener Anschluss an das Kommunikationssystem 30 möglich, beispielsweise über LAN- oder DSL-Netzwerke, Modem, ISDN oder dergleichen.

### Bezugszeichenliste

- 10: Kommunikationsteilnehmer
- 20: Mobilfunkendgerät
- 25: Steuereinrichtung
- 30: Kommunikationssystem
- 40: Kommunikationsteilnehmer
- 42: Steuereinrichtung
- 45: Mobilfunkendgerät
- 50: Datenleitung
- 60: Datenleitung
- 70: Datenleitung
- 80: Datenbank

- A1: erster Authentifizierungszustand
- A2: zweiter Authentifizierungszustand
- CN: Netzzugangspunkt
- CT: Steuersignal
- PEP: Netzzugangspunkt
- UAS: Zugangssteuereinheit
- VA: Verbindungsanfrage

## Patentansprüche

1. Verfahren zum Herstellen einer paketorientierten Kommunikationsverbindung zwischen einem ersten und einem zweiten Kommunikationsteilnehmer (10, 40),
**dadurch gekennzeichnet , dass**
- der erste Kommunikationsteilnehmer (10) bei einem Netzzugangspunkt (PEP) eines Kommunikationssystems (30) angemeldet und unter Zuweisung eines vorgegebenen ersten Anmeldestatus (A1) authentifiziert wird und
- die Kommunikationsverbindung auf eine Verbindungsanfrage (VA) des ersten Kommunikationsteilnehmers (10) hin hergestellt wird, sofern der zweite Kommunikationsteilnehmer (40) zuvor ein die Übernahme der Verbindungskosten signalisierendes Steuersignal (CT) an das Kommunikationssystem(30) übersendet hat.

2. Verfahren nach Anspruch 1,
**dadurch gekennzeichnet , dass**
der Anmeldestatus des ersten Kommunikationsteilnehmers (10) zumindest bezüglich der angefragten Kommunikationsverbindung zum zweiten Kommunikationsteilnehmer (40) in einen vorgegebenen zweiten Anmeldestatus (A2) überführt wird, sobald das Steuersignal (CT) beim Kommunikationssystem (30) vorliegt.

3. Verfahren nach Anspruch 1 oder 2,
**dadurch gekennzeichnet , dass**
als paketorientierte Kommunikationsverbindung eine internetkompatible Kommunikationsverbindung hergestellt wird.

4. Verfahren nach einem der voranstehenden Ansprüche,
**dadurch gekennzeichnet , dass**
- die Verbindungsanfrage des ersten Kommunikationsteilnehmers (10) ein Aufforderungssignal enthält, mit dem der zweite Kommunikationsteilnehmer (40) zur Abgabe des Steuersignals (CT) aufgefordert wird, und
- die Kommunikationsverbindung hergestellt wird, sofern der zweite Kommunikationsteilnehmer (40) das Steuersignal (CT) an das Kommunikationssystem (30) übersendet, und andernfalls die weitere Kommunikation zwischen den beiden Kommunikationsteilnehmern (10,40) kommunikationssystemseitig unterbunden oder nur auf Kosten des ersten Kommunikationsteilnehmers (10) freigegeben wird.

5. Verfahren nach einem der voranstehenden Ansprüche 3-4,
**dadurch gekennzeichnet , dass** als internetkompatible Kommunikationsverbindung eine Telefonverbindung nach dem Internet-Protokoll hergestellt wird.

6. Verfahren nach einem der voranstehenden Ansprüche 3-4,
**dadurch gekennzeichnet, dass** im Rahmen der internetkompatiblen Kommunikationsverbindung eine WEB-Seiten-Übertragung erfolgt.

7. Verfahren nach einem der voranstehenden Ansprüche 1-4,
**dadurch gekennzeichnet , dass** mit der Verbindungsanfrage eine zumindest die Dateigröße einer zu übersendenden Datei angebende Dateiinformation an den zweiten Kommunikationsteilnehmer (40) übersandt wird.

8. Verfahren nach Anspruch 7,
**dadurch gekennzeichnet , dass** an den zweiten Kommunikationsteilnehmer (40) die Datei übermittelt wird, nachdem er das Steuersignal (CT) an das Kommunikationssystem (30) übersendet hat.

9. Verfahren nach Anspruch 7 oder 8,
**dadurch gekennzeichnet , dass** als Datei eine Email, eine SMS, eine MMS oder eine Datendatei übersendet wird.

10. Verfahren nach einem der voranstehenden Ansprüche,
**dadurch gekennzeichnet , dass** der erste und/oder der zweite Kommunikationsteilnehmer (10,40) mit dem Kommunikationssystem (30) über eine Mobilfunkverbindung in Verbindung stehen.

11. Verfahren nach einem der voranstehenden Ansprüche,
**dadurch gekennzeichnet , dass** der zweite Kommunikationsteilnehmer (40) im Falle fehlender Anmeldung und Authentifizierung beim Kommunikationssystem (30) bei seinem zugehörigen Netzzugangspunkt des Kommunikationssystems (30) selbsttätig vom Kommunikationssystem (30) angemeldet und authentifiziert wird, sobald eine Verbindungsanfrage für ihn beim Kommunikationssystem (30) vorliegt.

12. Mobilfunkendgerät (20,45) zur Durchführung eines Verfahrens nach einem der voranstehenden Ansprüche 4-11,
**dadurch gekennzeichnet , dass** es eine Steuereinrichtung (25,42) aufweist, die zum Erzeugen einer ein Aufforderungssignal enthaltenden Verbindungsanfrage (VA) und/oder zum Verarbeiten einer solchen Verbindungsanfrage und zum Erzeugen des Steuersignals (CT) geeignet ist.

13. Kommunikationssystem (30) zur Durchführung eines Verfahrens nach einem der voranstehenden Ansprüche 4-11 mit einem Netzzugangspunkt (PEP) zum Anmelden und Authentifizieren eines ersten Kommunikationsteilnehmers (10),
**dadurch gekennzeichnet , dass** der Netzzugangspunkt derart ausgestaltet ist, dass er nach Anmelden und Authentifizieren des ersten Kommunikationsteilnehmers (10) eine Kommunikationsverbindung zu einem zweiten Kommunikationsteilnehmer (40) auf eine ein Aufforderungssignal enthaltende Verbindungsanfrage (VA) des ersten Kommunikationsteilnehmers (10) hin ermöglicht, sofern der zweite Kommunikationsteilnehmer (40) ein die Übernahme der Verbindungskosten signalisierendes Steuersignal (CT) an das Kommunikationssystem übersendet oder bereits zuvor übersendet hat.

14. Kommunikationssystem nach Anspruch 13,
**dadurch gekennzeichnet , dass** der Netzzugangspunkt (PEP, CN) dazu geeignet ist, für jeden Kommunikationsteilnehmer zumindest zwei unterschiedliche Anmeldestatus (A1, A2) zu verwalten.
